# EUROPÄISCHE PATENTSCHRIFT

(11) **EP 4 410 719 B1**
(45) Veröffentlichungstag und Bekanntmachung des Hinweises auf die Patenterteilung: **04.03.2026**
(21) Anmeldenummer: 24150469.5
(22) Anmeldetag: 05.01.2024
(51) Int. Cl.: B65G 47/08, B65G 47/82

(54) **TRANSPORTSYSTEM, SYSTEM UND VERFAHREN ZUM PAKETWEISEN TRANSPORTIEREN STERILER OBJEKTE**
TRANSPORT SYSTEM, SYSTEM AND METHOD FOR PACKAGE-WISE TRANSPORT OF STERILE OBJECTS
SYSTÈME DE TRANSPORT, SYSTÈME ET PROCÉDÉ POUR LE TRANSPORT PAR PAQUETS D'OBJETS STÉRILES

(30) Priorität: 06.02.2023 DE 102023200949
(43) Veröffentlichungstag der Anmeldung: 07.08.2024
(73) Patentinhaber: OPTIMA pharma GmbH, 74523 Schwäbisch Hall (DE)
(72) Erfinder: Theobald, Thorsten, 74523 Schwäbisch Hall (DE)
(74) Vertreter: Patentanwälte Ruff, Wilhelm, Beier, Dauster & Partner mbB

(56) Entgegenhaltungen:
- EP-A2- 1 717 533
- WO-A1-2007/131760
- US-A1- 2016 116 212

## Beschreibung

Die Erfindung betrifft ein Transportsystem zum paketweisen Transportieren steriler Objekte sowie ein System mit einem derartigen Transportsystem. Darüber hinaus betrifft die Erfindung ein Verfahren zum paketweisen Transportieren steriler Objekte mittels eines derartigen Transportsystems.

Sterile Objekte wie mit einem Inhalt befüllte pharmazeutische Primärpackmittel werden häufig einem Gefriertrockner zugeführt, insbesondere um dem Inhalt zur Verbesserung seiner Haltbarkeit Feuchtigkeit, d. h. insbesondere Wasser, zu entziehen. Bei derartigen Primärpackmitteln kann es sich um Ampullen oder andere Behältnisse handeln, beispielsweise Behältnisse aus Glas in Form sogenannter "Vials". Der Inhalt, mit welchem das Primärpackmittel befüllt ist, kann einen Arzneistoff und/oder einen aktiven pharmazeutischen Wirkstoff umfassen. Dabei werden zum Gefriertrocknen herkömmlicherweise Gefriertrockner mit einer Trockenkammer verwendet, welcher innerhalb einer Reinraumumgebung die sterilen Objekte zugeführt werden. Zum Beladen einer derartigen Trockenkammer mit sterilen Objekten wird dabei gewöhnlich ein Beladesystem mit einer Spindel eingesetzt. Die Spindel dient dabei einem Verstellen einer Einschubleiste quer zu einer Transportstrecke, um auf der Transportstrecke positionierte sterile Objekte in die Trockenkammer einzuschieben, die in einer gemeinsamen Flucht mit einer Achse der Spindel angeordnet ist.

Insbesondere dient die Spindel eines solche herkömmlichen Beladesystems einem Verstellen der Einschubleiste quer zu der Transportstrecke, um auf der Transportstrecke lückenlos aufgereiht stehende sterile Behältnisse in die Trockenkammer einzuschieben. Besagte Behältnisse oder sterile Objekte können in einer gemeinsamen Flucht mit der Spindel aufgereiht sein. Ein Nachteil einer solchen herkömmlichen Bauweise ist der beträchtliche Platzbedarf vor dem Beladesystem, um die für die Einschubbewegung notwendigen Bauteile unterzubringen. Dieser Platzbedarf kann die Zugänglichkeit besagter Bauteile innerhalb der Reinraumumgebung für das Bedienpersonal während eines Normalbetriebs sowie während vor- und nachbereitenden Arbeiten am Beladesystem, einschließlich der Reinigung, beeinträchtigen. Ein weiterer Nachteil eines derartigen herkömmlichen Beladesystems kann das Erfordernis zusätzlicher statischer und/oder beweglicher Dichtelemente für die relative Linearbewegung der Spindel zu einem trennenden Gehäuse der Reinraumumgebung sein. Insbesondere, da aus Kostengründen das Volumen der Reinraumumgebung klein gehalten werden soll, Spindelelemente jedoch einen vergleichsweise großen Bauraum aufweisen, werden die Spindelelemente häufig teils innerhalb und teils außerhalb der Reinraumumgebung positioniert.

Insbesondere werden bei Spindeln herkömmlicherweise Faltenbälge als elastisches Dichtelement zwischen dem feststehenden Gehäuse der Reinraumumgebung und dem beweglichen Ende der Spindel - der Einschubleiste - verwendet. Faltenbälge bestehen meist aus dünnwandigen elastischen Werkstoffen oder einer seriellen Anordnung dünnwandiger elastischer Elemente, welche anfällig für Beschädigungen sind und aufgrund ihrer Topografie schwer zu reinigen sind. Beschädigungen der dünnwandigen elastischen Dichtungselemente können zu Undichtigkeiten und damit zum Verlust der Reinraumbedingungen führen. Geschieht dies während der Produktion, so kann dies zum Verlust einer Produktions-Charge, im schlechtesten Fall zum Verlust des gesamten Produktinhaltes einer Gefriertrockner-Kammer, führen.

Die WO 2007/131760 A1 offenbart ein Ladesystem für einen Gefriertrockner, welches eine Vielzahl von Transferrahmen umfasst, von denen jeder eine Charge von Behältern umgibt, die in den Gefriertrockner geladen werden sollen.

Die US 2016/116212 A1 lehrt eine Vorrichtung zum Einführen von Flaschen in eine Gefriertrocknungskammer einer Gefriertrocknungsmaschine, die mit einer Ankunftsebene der Flaschen und mit einer Ablageebene innerhalb der Gefriertrocknungskammer versehen ist, mit mindestens einem Mittel für eine begrenzte Zufuhr, das mit einer Schubstange zusammenwirkt, um es entlang eines Annäherungsweges in der Richtung von der Ankunftsebene zur Ablageebene zu bewegen.

Außerdem geht aus der EP 1 717 533 A2 eine Vorrichtung zum kontrollierten Herausführen einer Anzahl von Vials aus einer Gefriertrocknungsanlage hervor.

Es ist eine Aufgabe der Erfindung, ein Transportsystem zum paketweisen Transportieren steriler Objekte sowie ein ein derartiges Transportsystem umfassendes System zum Gefriertrocknen steriler Objekte und ein Verfahren zum paketweisen Transportieren steriler Objekte mittels eines derartigen Transportsystems zu schaffen, welche verbesserte Eigenschaften aufweisen. Insbesondere soll ein Transport steriler Objekte unter besonders geringfügiger Verwirbelung einer die sterilen Objekte während des Transports umgebenden Umgebungsluft ermöglicht werden.

Ein erfindungsgemäßes Transportsystem dient einem paketweisen Transportieren steriler Objekte. Bei den sterilen Objekten kann es sich um unverschlossene Behältnisse, insbesondere Ampullen oder sogenannte "Vials" aus Glas handeln, die einen Inhalt aufweisen. Derartige Behältnisse können dazu verwendet werden, ein Produkt mit einem aktiven pharmazeutischen Wirkstoff, insbesondere einen Arzneistoff, als Inhalt des Behältnisses aufzubewahren. Die Behältnisse sind in Ausgestaltungen aus einem Glaswerkstoff hergestellt, die Erfindung ist jedoch nicht auf die Verwendung mit Behältnissen aus Glas beschränkt.

Das Transportsystem weist eine Transportfläche auf. Auf der Transportfläche ist eine Anzahl zu transportierender steriler Objekte verschiebbar. "Paketweises Transportieren" bedeutet im vorliegenden Zusammenhang, dass jeweils ein Paket an sterilen Objekten in Transportrichtung transportiert werden kann. "Paketweises Transportieren" kann im vorliegenden Zusammenhang insbesondere bedeuten, dass jeweils ein Paket aus einer oder mehreren lückenlos aneinander stehenden Reihen mit hexagonal dichtest möglicher Anordnung von sterilen Objekten, insbesondere Glas-Vials, in Transportrichtung transportiert werden kann. Das Paket kann die Anzahl zu transportierender steriler Objekte aufweisen. Die Anzahl kann ein steriles Objekt oder mehrere, vorzugsweise gleichartige, sterile Objekte umfassen, insbesondere 5 bis 25000 sterile Objekte. Der Begriff "Paket" kann im Zusammenhang mit der Anmeldung in einer Ausgestaltung synonym zu dem Begriff "Charge" verstanden werden. In anderen Ausgestaltungen bilden mehrere Pakete eine Charge, welche gemeinsam einem Gefriertrocknungsprozess unterzogen wird,

Das Transportsystem weist eine Transporteinheit mit einem Interaktionsabschnitt auf. Der Interaktionsabschnitt dient einem Verschieben der auf der Transportfläche verschiebbaren Anzahl steriler Objekte in einer Transportrichtung des Transportsystems. Infolge des Verschiebens kann die Anzahl steriler Objekte über die Transportfläche hinweg in Transportrichtung verstellt werden. Ferner weist das Transportsystem eine von der Transportfläche rückspringende Vertiefung zum Aufnehmen des Interaktionsabschnitts auf. Die Transporteinheit weist zudem eine antreibbare Stelleinrichtung auf. Der Interaktionsabschnitt kann als starr an der Stelleinrichtung angeordnete Leiste ausgebildet sein. Der Interaktionsabschnitt kann als Rechen ausgebildet sein. Der Interaktionsabschnitt kann eine Rolle aufweisen, die relativ zur Stelleinrichtung drehbeweglich ist, insbesondere um eine quer zur Transportrichtung verlaufende Rollenachse. Mittels der antreibbaren Stelleinrichtung ist der Interaktionsabschnitt relativ zu der Transportfläche zwischen einer ersten Endposition und einer zweiten Endposition verstellbar. Dabei ist der Interaktionsabschnitt in seiner ersten Endposition in der Vertiefung versenkt, um die Vertiefung bündig mit der Transportfläche abschließend zu verschließen. In der ersten Endposition kann der Interaktionsabschnitt schwerkraftrichtungsbezogen unterhalb der Transportfläche angeordnet sein. In der zweiten Endposition ist der Interaktionsabschnitt in Transportrichtung in einem ersten Abstand zu der Vertiefung auf der Transportfläche angeordnet.

Vorteilhaft ermöglicht es das Transportsystem, sterile Objekte paketweise zu transportieren, ohne dass Komponenten des Transportsystems direkt oberhalb der transportierten sterilen Objekte angeordnet sind. Insbesondere können mittels des Transportsystems sterile Objekte paketweise transportiert werden, ohne dass Komponenten des Transportsystems schräg oberhalb der transportierten sterilen Objekte angeordnet sind. Auf diese Weise lassen sich Verwirbelungen in einer die sterilen Objekte beim Transport umgebenden Umgebungsluft oberhalb der zu transportierenden sterilen Objekte auf ein tolerierbares Maß reduzieren oder sogar vermeiden. Insbesondere lassen sich Verwirbelungen in einer die sterilen Objekte in der Reinraumumgebung umgebenden unidirektionalen Luft-Verdrängungsströmung oberhalb der zu transportierenden sterilen Objekte vermeiden. Derartige Verwirbelungen könnten andernfalls zu einer unerwünschten Kontamination der, vorzugsweise unverschlossenen, sterilen Objekte - insbesondere ihres sterilen Inhalts - führen, beispielsweise wenn infolge der Verwirbelungen Partikel wie Staub oder andere Luftverunreinigungen aus der Umgebung auf die sterilen Objekte befördert werden. Außerdem baut das erfindungsgemäße Transportsystem besonders kompakt entlang der Transportrichtung, insbesondere da auf eine gewöhnlich eingesetzte sperrige Spindel verzichtet werden kann.

In Ausgestaltung der Erfindung ist der Interaktionsabschnitt mittels der antreibbaren Stelleinrichtung zwischen der ersten Endposition und der zweiten Endposition über eine Zwischenposition oder mehrere Zwischenpositionen verstellbar. Vorzugsweise ist der Interaktionsabschnitt dabei derart verstellbar, dass der Interaktionsabschnitt die Transportfläche, insbesondere zwischen der Zwischenposition und der zweiten Endposition, entlang der Transportrichtung überstreicht. Beim Überstreichen der Transportfläche kann der Interaktionsabschnitt im Wesentlichen berührungslos parallel zur Transportfläche verstellt oder verfahren werden. In der Zwischenposition ist eine Unterseite des Interaktionsabschnitts auf einem Niveau der Transportfläche oder oberhalb des Niveaus der Transportfläche angeordnet. Die Zwischenposition ist dabei entlang der Transportrichtung in einem zweiten Abstand zur zweiten Endposition angeordnet. Infolge des, vorzugsweise weitgehend oder im Wesentlichen parallelen, in Ausgestaltungen berührungslosen Überstreichens der Transportfläche können auf der Transportfläche befindliche sterile Objekte mittels des Interaktionsabschnitts in Transportrichtung verschoben werden. Zweckmäßig entspricht die zweite Endposition in Ausgestaltungen einer Zielposition des Pakets bzw. der Charge auf einer Stellplatte in der Gefriertrockner-Kammer.

In weiterer Ausgestaltung der Erfindung weist das Transportsystem eine Zuführeinrichtung auf, mittels welcher die Anzahl steriler Objekte auf der Transportfläche positionierbar ist, insbesondere bevor das Verschieben der sterilen Objekte mittels des Interaktionsabschnitts erfolgt. Dabei ist die Zuführeinrichtung dazu eingerichtet, bei in der ersten Endposition befindlichem Interaktionsabschnitt die Anzahl steriler Objekte von einem Vorladebereich des Transportsystems über den Interaktionsabschnitt hinweg auf die Transportfläche zu schieben. Die Anzahl steriler Objekte kann mittels der Zuführeinrichtung in Transportrichtung vor den Interaktionsabschnitt geschoben werden. Insbesondere ist ein Positionieren der zu transportierenden sterilen Objekte auf der Transportfläche mittels der Zuführeinrichtung nur dann möglich, wenn sich der Interaktionsabschnitt in seiner ersten Endposition befindet, also wenn der Interaktionsabschnitt in der Vertiefung versenkt ist. Die Zuführeinrichtung kann die Anzahl steriler Objekte an die Transporteinheit, d.h. an den Interaktionsabschnitt, übergeben. Nach Übergabe können die sterilen Objekte mittels der Transporteinheit in Transportrichtung über die Transportfläche verschoben werden, insbesondere vom Vorladebereich weggerichtet. Der Vorladebereich kann vorteilhaft einen Pufferspeicher zum Zwischenspeichern zu fördernder steriler Objekte ausbilden. Dies ermöglicht besonders kurze Taktzeiten beim paketweisen Transportieren steriler Objekte mittels des Transportsystems. Insbesondere können erneut sterile Objekte zugeführt und für ein neues Paket zwischengespeichert werden, während der Transport des zuvor gebildeten Pakets auf die zweite Endposition des Interaktionsabschnitts stattfindet.

Zweckmäßig ist die Zuführeinrichtung zur Kommissionierung steriler Objekte eingerichtet. Mit anderen Worten: Mittels der Zuführeinrichtung können sterile Objekte abgezählt und zu der zu transportierenden Anzahl oder dem Paket zusammengeführt werden. Diese Anzahl oder dieses Paket kann dann mit den abgezählten sterilen Objekten auf der Transportfläche positioniert werden.

In weiterer Ausgestaltung der Erfindung weist die Zuführeinrichtung ein Stempelelement auf, welches entlang der Transportrichtung relativ zu der Transportfläche zwischen einer ersten Stempelposition und einer zweiten Stempelposition verstellbar ist. Die Transportrichtung kann im Wesentlichen parallel zur Transportfläche verlaufen. Das Stempelelement kann folglich im Wesentlichen parallel zur Transportfläche verstellbar sein. Das Stempelelement kann in der Art eines Querschiebers, eines Kolbens oder eines Stößels oder einer Leiste ausgebildet sein. Dabei ist die Vertiefung entlang der Transportrichtung zwischen der ersten Stempelposition und der zweiten Stempelposition angeordnet. Da sowohl mittels des Stempelelements als auch mittels des Interaktionsabschnitts ein Verschieben der Anzahl an sterilen Objekten in ein- und derselben Transportrichtung erfolgt, kann das Transportsystem entlang der Transportrichtung besonders kompakt bauend ausgeführt werden.

In weiterer Ausgestaltung der Erfindung weist das Transportsystem eine gemeinsame Steuerungseinrichtung auf, mittels welcher die Zuführeinrichtung und die Transporteinheit, insbesondere die antreibbare Stelleinrichtung, aufeinander abgestimmt steuerbar sind. Zweckmäßig sind die Zuführeinrichtung und die Transporteinheit mittels der gemeinsamen Steuerungseinrichtung aufeinander abgestimmt steuerbar, um ein erfindungsgemäßes Verfahren zum paketweisen Transportieren steriler Objekte durchzuführen, welches an späterer Stelle detaillierter beschrieben werden wird. Mittels der gemeinsamen Steuerungseinrichtung können die Bewegungsabläufe der Zuführeinrichtung und der Transporteinheit miteinander koordiniert werden, derart dass eine Kollision von Zuführeinrichtung und Transporteinheit selbst in einem Überschneidungsbereich der Verstellbarkeiten von Zuführeinrichtung und Transporteinheit vermieden werden kann. In besagtem Überschneidungsbereich kann die Übergabe der Anzahl steriler Objekte von der Zuführeinrichtung an den Interaktionsabschnitt erfolgen.

In weiterer Ausgestaltung der Erfindung weist die antreibbare Stelleinrichtung eine Basis und einen steuerbaren Gelenkarm auf. Dabei ist die Basis relativ zur Transportfläche unbeweglich. Der Gelenkarm ist einenends mit der Basis gelenkig verbunden. Andernends ist der Gelenkarm mit dem Interaktionsabschnitt verbunden. Insbesondere weist der Gelenkarm wenigstens zwei gelenkig miteinander verbundene Armglieder auf. Jedes Gelenk zwischen zwei benachbarten Armgliedern weist wenigstens eine Gelenkachse auf, um welche die beiden mittels dieses Gelenks miteinander verbundenen Armglieder relativ zueinander verschwenkbar sind. Es kann sich also um einen mehrgelenkigen und/oder mehrachsigen Gelenkarm handeln. Mittels eines derartigen Gelenkarms lässt sich der Interaktionsabschnitt besonders präzise verstellen.

Zweckmäßig ist die antreibbare Stelleinrichtung, insbesondere der steuerbare Gelenkarm, ausschließlich seitlich des Interaktionsabschnitts angeordnet. Mit anderen Worten: Ein Raum - insbesondere schwerkraftrichtungsbezogen - oberhalb des Interaktionsabschnitts ist vorzugsweise frei von der antreibbaren Stelleinrichtung, insbesondere von dem steuerbaren Gelenkarm. Dies begünstigt die bereits erwähnte Verringerung von Verwirbelungen in einer die sterilen Objekte umgebenden Umgebungsluft. Insbesondere können derartige durch das Transportsystem selbst verursachte Verwirbelungen vollständig vermieden werden, da beim paketweisen Transportieren zu keinem Zeitpunkt Komponenten des Transportsystems direkt oberhalb der sterilen Objekte angeordnet sind. Zweckmäßig sind beim paketweisen Transportieren zu keinem Zeitpunkt Komponenten des Transportsystems direkt oberhalb oder oberhalb schräg versetzt der sterilen Objekte angeordnet.

In weiterer Ausgestaltung der Erfindung schließt in der ersten Endposition des Interaktionsabschnitts eine Oberseite des Interaktionsabschnitts bündig mit der Transportfläche ab. Auf diese Weise lässt sich - wenn sich der Interaktionsabschnitt in seiner ersten Endposition befindet - eine durchgängige, d.h. insbesondere stufenfreie, Transportebene ausbilden, die die Transportfläche und die Oberseite des Interaktionsabschnitts umfasst. Die Transportebene kann zudem den Vorladebereich aufweisen. Vorteilhaft sind somit in der ersten Endposition des Interaktionsabschnitts keinerlei Störkonturen vorhanden, die von der Transportebene abweichen und die zu einem Umkippen zu transportierender steriler Objekte führen könnten, wenn die sterilen Objekte bei ihrem Verschieben mit einer derartigen Störkontur in Eingriff gelangen.

In weiterer Ausgestaltung der Erfindung weist das Transportsystem ein Stellelement auf, welches in der Vertiefung quer zur Transportfläche zwischen einer ausgefahrenen Position und einer eingefahrenen Position beweglich geführt ist. Dabei schließt das Stellelement in der eingefahrenen Position bündig mit der Transportfläche ab. In der ausgefahrenen Position springt das Stellelement von der Transportfläche vor. Das Stellelement ist infolge des Versenkens des Interaktionsabschnitts in der Vertiefung von der ausgefahrenen Position in die eingefahrene Position verstellbar. Infolge eines Entfernens des Interaktionsabschnitts aus der Vertiefung ist das Stellelement von der eingefahrenen Position in die ausgefahrene Position verstellbar. Das Verstellen des Stellelements kann mittels des Interaktionsabschnitts erfolgen. Insbesondere kann infolge eines Verstellens des Interaktionsabschnitts zwischen seiner ersten Endposition und seiner Zwischenposition das Stellelement zwischen seiner eingefahrenen und seiner ausgefahrenen Position verstellt werden. Das Stellelement kann sich in seiner eingefahrenen Position befinden, wenn sich der Interaktionsabschnitt in seiner ersten Endposition befindet. Das Stellelement kann sich in seiner ausgefahrenen Position befinden, wenn sich der Interaktionsabschnitt in seiner Zwischenposition befindet. Das Stellelement kann sich in seiner ausgefahrenen Position befinden, wenn der Interaktionsabschnitt zwischen der Zwischenposition und seiner zweiten Endposition verstellt wird und/oder wenn sich der Interaktionsabschnitt in seiner zweiten Endposition befindet.

In Ausgestaltungen kommt es beim paketweisen Transportieren steriler Produkte mittels des Transportsystems zu keinem Kontakt der sterilen Objekte mit dem Stellelement.

Ein erfindungsgemäßes System dient einem Gefriertrocknen steriler Objekte, insbesondere unverschlossener Ampullen, Vials oder anderer Behältnisse, insbesondere mit einem Inhalt. Derartige Behältnisse können aus einem Glaswerkstoff hergestellt sein, insbesondere können Vials in Form von Glas-Vials dem System zugeführt werden. Für ein Gefriertrocknen der sterilen Objekte kann insbesondere dem Inhalt der Ampullen, Vials oder Behältnisse durch das Gefriertrocken mittels des erfindungsgemäßen Systems Wasser entzogen werden. Das System weist einen Gefriertrockner mit einer Trockenkammer auf. Das System weist zudem ein erfindungsgemäßes Transportsystem wie voranstehend beschrieben auf. Dabei endet die Transportfläche des Transportsystems in Transportrichtung in der Trockenkammer, so dass mittels des Transportsystems paketweise sterile Objekte der Trockenkammer zuführbar sind. Ein Gefriertrocknungsprozess erfolgt je nach Ausgestaltung unmittelbar im Anschluss an ein Zuführen eines Pakets oder nach einem Zuführen einer Anzahl an Pakete zu der Trockenkammer. Die voranstehend beschriebenen Vorteile des erfindungsgemäßen Transportsystems übertragen sich auch auf das erfindungsgemäße System mit einem derartigen Transportsystem.

Ein erfindungsgemäßes Verfahren dient zum paketweisen Transportieren steriler Objekte, insbesondere unverschlossener Ampullen, Vials oder anderer Behältnisse, mittels eines erfindungsgemäßen Transportsystems wie voranstehend beschrieben, insbesondere in einem erfindungsgemäßen System wie voranstehend beschrieben. Die Behältnisse - die beispielsweise als Vials vorliegen können - weisen insbesondere einen Inhalt auf. Die vorstehend erläuterten Vorteile des erfindungsgemäßen Transportsystems und des erfindungsgemäßen Systems lassen sich mittels des erfindungsgemäßen Verfahrens ausnutzen. Das Verfahren weist einen Schritt a) auf. Gemäß dem Schritt a) erfolgt ein Verstellen des Interaktionsabschnitts in seine erste Endposition. Das Verfahren weist ferner einen Schritt b) auf. Gemäß dem Schritt b) erfolgt - wenn sich der Interaktionsabschnitt in seiner ersten Endposition befindet - ein Positionieren einer vorbestimmten Anzahl steriler Objekte auf der Transportfläche mittels einer Zuführeinrichtung, insbesondere über den Interaktionsabschnitt hinweg. Während der Durchführung von Schritt b) ist der Interaktionsabschnitt zweckmäßig in der Vertiefung versenkt. Das Verfahren weist außerdem einen Schritt c) auf. Gemäß dem Schritt c) erfolgt - wenn sich die vorbestimmte Anzahl steriler Objekte auf der Transportfläche befindet - ein Entfernen der Zuführeinrichtung von der Transportfläche, insbesondere über den Interaktionsabschnitt hinweg. Während der Durchführung von Schritt c) ist der Interaktionsabschnitt zweckmäßig in der Vertiefung versenkt. Das Verfahren weist zudem einen Schritt d) auf. Gemäß dem Schritt d) erfolgt - wenn die Zuführeinrichtung von der Transportfläche und der Vertiefung entfernt ist - ein Verstellen des Interaktionsabschnitts aus seiner ersten Endposition in seine zweite Endposition, um die vorbestimmte Anzahl steriler Objekte auf der Transportfläche in Transportrichtung zu verschieben. Das Verfahren kann außerdem einen Schritt e) aufweisen. Gemäß diesem, insbesondere optionalen, Schritt e) erfolgt - wenn sich der Interaktionsabschnitt in seiner zweiten Endposition befindet - ein erneutes Durchführen von Schritt a), um eine weitere vorbestimmte Anzahl steriler Objekte zu transportieren. Zweckmäßig werden die Schritte a) bis e) in der zeitlichen Reihenfolge a) - b) - c) - d) - e) nacheinander ausgeführt. Bei Durchführung des Verfahrens können mittels des Transportsystems paketweise sterile Objekte diskontinuierlich in Transportrichtung transportiert werden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind. Dabei beziehen sich gleiche Bezugszeichen auf gleiche oder ähnliche oder funktional gleiche Bauteile.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
- Fig. 1: zeigt in schematischer Seitendarstellung eine Ausführungsform eines erfindungsgemäßen Systems mit einer Ausführungsform eines erfindungsgemäßen Transportsystems in der Art einer Momentaufnahme bei exemplarischer Durchführung eines erfindungsgemäßen Verfahrens,
- Fig. 2 bis 4: das System nach Fig. 1 in der Art weiterer Momentaufnahmen bei der Durchführung des erfindungsgemäßen Verfahrens,
- Fig. 5: in schematischer Seitendarstellung eine weitere Ausführungsform des erfindungsgemäßen Transportsystems in der Art einer Momentaufnahme bei exemplarischer Durchführung eines erfindungsgemäßen Verfahrens,
- Fig. 6 und 7: das Transportsystem nach Fig. 5 in der Art weiterer Momentaufnahmen bei der Durchführung des erfindungsgemäßen Verfahrens, und

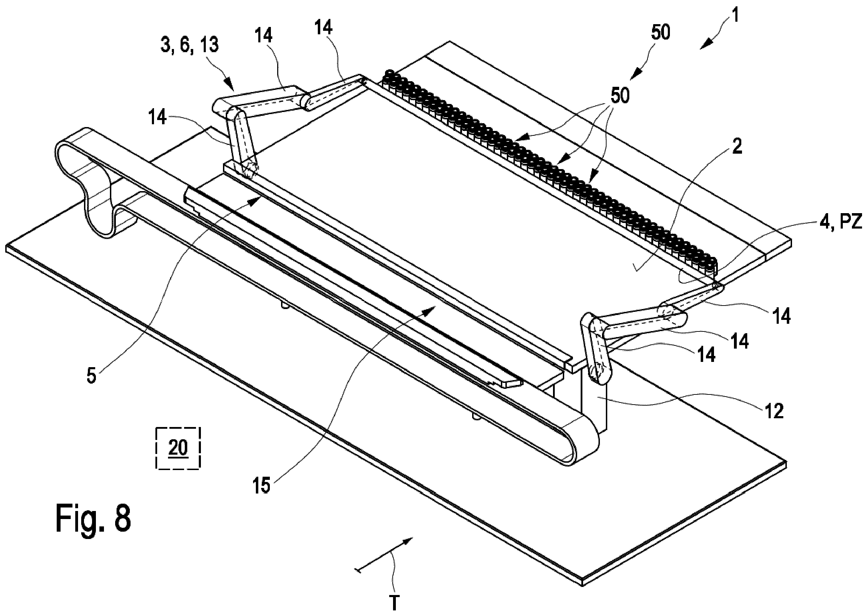

- Fig. 8: das Transportsystem nach Fig. 1 in schematischer Perspektivdarstellung.

Ein erfindungsgemäßes System 100 dient einem paketweisen Gefriertrocknen steriler Objekte 50. "Paketweise" kann in diesem Zusammenhang bedeuten, dass mehrere sterile Objekte 50 einer Charge gemeinsam, d.h. zeitgleich, eine Gefriertrocknungsprozess zugeführt werden. Im Anschluss kann eine weitere Charge gefriergetrocknet werden. In anderen Ausgestaltungen ist eine Charge in mehrere Pakete unterteilt, welche nacheinander zugeführt und im Anschluss gemeinsam gefriergetrocknet werden.

Bei den sterilen Objekten 50 handelt es sich beispielsweise um unverschlossene Vials 51 mit einem Inhalt, der beispielsweise einen pharmazeutischen Wirkstoff umfasst. Als Vial, Injektionsfläschchen oder Stechampullen werden im Zusammenhang mit der Anmeldung kleine Fläschchen bezeichnet, die beispielsweise in der Medizin und in chemischen Laboratorien benutzt werden.

Das System 100 wird vorzugsweise in Reinraumumgebung eingesetzt. Das System 100 weist einen Gefriertrockner 101 mit einer Trockenkammer 102 auf. Zudem umfasst das System 100 ein erfindungsgemäßes Transportsystem 1. Eine Transportfläche 2 des Transportsystems 1 endet dabei in einer Transportrichtung T in der Trockenkammer 102. Mittels des Transportsystems 1 sind sterile Objekte 50 der Trockenkammer 102 paketweise, d. h. in einem Paket steriler Objekte 50 nach dem anderen, zuführbar. Durch Gefriertrocknen 102 kann dem Inhalt einer in der Trockenkammer 102 angeordneten Charge von Vials 51, umfassend ein Paket oder mehrere Pakete, Wasser entzogen werden.

Das Transportsystem 1 dient also einem paketweisen Transportieren steriler Objekte 50, vorliegend unverschlossener Vials 51 mit einem Inhalt. Im System 100 können mittels des Transportsystems 1 die sterilen Objekte 50 paketweise transportiert werden, um ein Paket an sterilen Objekten 50 in der Trockenkammer 102 zu positionieren. Auf der Transportfläche 2 des Transportsystems 1 ist eine Anzahl N zu transportierender steriler Objekte 50 verschiebbar. Die Anzahl N zu transportierender steriler Objekte 50 kann einer Charge an sterilen Objekten 50 entsprechen. Die Transportfläche 2 kann an einer Oberseite einer Tischplatte des Transportsystems 1 angeordnet sein. Die auf der Transportfläche 2 verschiebbaren sterilen Objekte 50 können auf der Transportfläche 2 abgestellt sein, bevor sie verschoben werden. Das Transportsystem 1 weist darüber hinaus eine Transporteinheit 3 auf. Die Transporteinheit 3 hat einen Interaktionsabschnitt 4 zum Verschieben der auf der Transportfläche 2 verschiebbaren Anzahl N steriler Objekte 50 in der Transportrichtung T. Der Interaktionsabschnitt 4 kann leistenförmig ausgebildet sein. Beispielsweise kann der Interaktionsabschnitt 4 als Leiste, als Rolle oder als Rechen ausgebildet sein. Der Interaktionsabschnitt 4 kann quer zur Transportrichtung T längserstreckt sein. Das Transportsystem 1 weist ferner eine Vertiefung 5 zum Aufnehmen des Interaktionsabschnitts 4 auf, wobei die Vertiefung 5 von der Transportfläche 2 rückspringt. Die Transportfläche 2 kann im Wesentlichen eben ausgebildet sein. Die Vertiefung 5 kann durch eine Aussparung oder einen Durchbruch der die Transportfläche 2 aufweisenden Tischplatte ausgebildet sein.

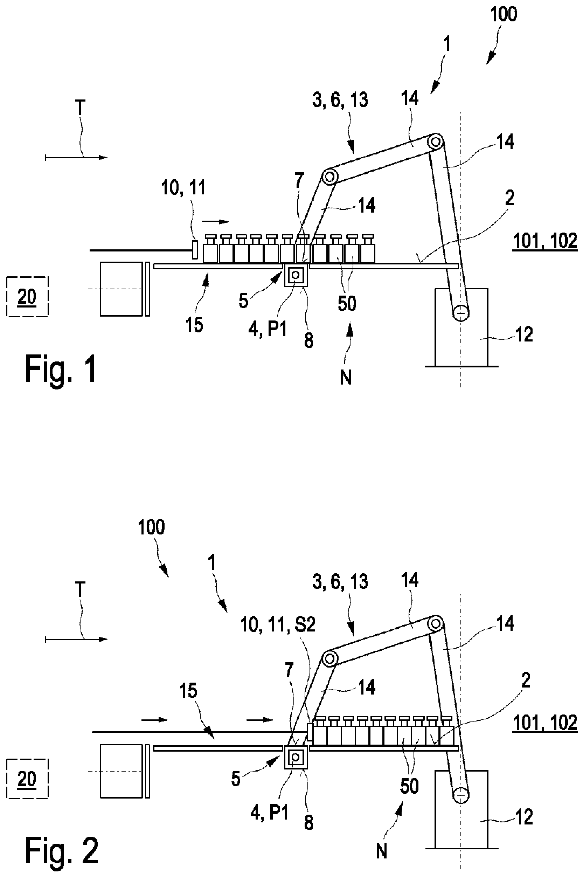

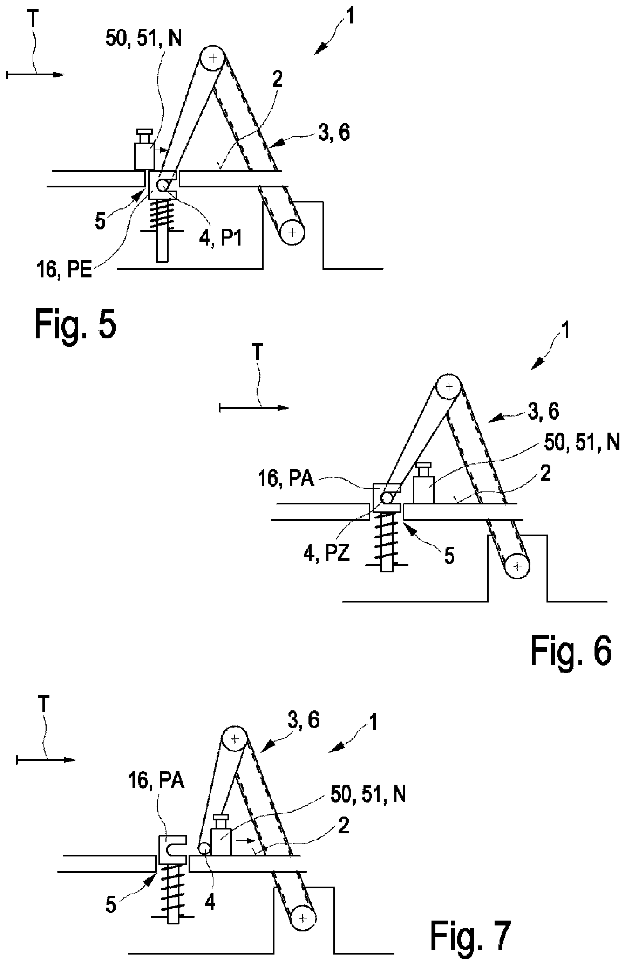

Die Transporteinheit 3 des Transportsystems 1 weist eine antreibbare Stelleinrichtung 6 auf. Der Interaktionsabschnitt 4 ist mittels der antreibbaren Stelleinrichtung 6 relativ zu der Transportfläche 2 zwischen einer ersten Endposition P1 und einer zweiten Endposition P2 verstellbar. Dabei ist in der ersten Endposition P1 der Interaktionsabschnitt 4 in der Vertiefung 5 versenkt. Der Interaktionsabschnitt 2 kann also in seiner ersten Endposition P1 in der Vertiefung 5 aufgenommen sein. Dadurch, dass der Interaktionsabschnitt 4 in seiner ersten Endposition P1 in der Vertiefung 5 versenkt wird, kann die Vertiefung 5 bündig mit der Transportfläche 2 abschließend verschlossen werden. Der bündige Verschluss der Vertiefung 5 mit der Transportfläche 2 kann entweder durch das Interaktionselement 4 selbst (siehe Fig. 1 bis 4) oder durch ein gesondertes Stellelement 16 (siehe Fig. 5 bis 7) erfolgen. Im Unterschied zur ersten Endposition P1 ist der Interaktionsabschnitt 4 in seiner zweiten Endposition P2 in Transportrichtung T in einem ersten Abstand zu der Vertiefung 5 auf der Transportfläche 2 angeordnet.

Bei der Ausführungsform nach den Fig. 1 bis 4 ist der Interaktionsabschnitt 4 in seiner ersten Endposition P1 derart in der Vertiefung 5 versenkt, dass eine Oberseite 7 des Interaktionsabschnitts 4 mit der Transportfläche 2 fluchtet. Die Oberseite 7 bildet also in der ersten Endposition P1 eine bündige, d.h. insbesondere stufenfreie, Ergänzung der Transportfläche 2, derart dass die Oberseite 7 und die Transportfläche 2 in einer gemeinsamen Transportebene enthalten sind.

Im Unterschied zur Ausführungsform nach den Fig. 1 bis 4 ist bei der Ausführungsform nach den Fig. 5 bis 7 das Stellelement 16 vorgesehen, welches in der Vertiefung 5 quer zur Transportrichtung 2 zwischen einer ausgefahrenen Position PA und einer eingefahrenen Position PE beweglich geführt ist. In seiner eingefahrenen Position PE schließt das Stellelement 16 bündig mit der Transportfläche 2 ab, um die Vertiefung 5 mit der Transportfläche 2 bündig abschließend zu verschließen. In seiner ausgefahrenen Position PA springt das Stellelement 16 von der Transportfläche 2 vor. Das sich in seiner ausgefahrenen Position PA befindende Stellelement 16 kann einen Anschlag für sterile Objekte 50 ausbilden, die in Transportrichtung T vor der Transportfläche 2 angeordnet sind. Das Stellelement 16 ist infolge des Versenkens des Interaktionsabschnitts 4 in der Vertiefung 5 von der ausgefahrenen Position PA in die eingefahrene Position PE verstellbar. Das Verstellen des Stellelements 16 kann mittels des Interaktionsabschnitts 4 erfolgen. Vorliegend weist das Stellelement 16 hierzu einen Aufnahmeabschnitt auf, der entgegen der Transportrichtung T ausgenommen ist, um den Interaktionsabschnitt 4 aufzunehmen. Ist der Interaktionsabschnitt 4 in dieser Ausnehmung aufgenommen, sind das Stellelement 16 und der Transportabschnitt 4 derart miteinander gekoppelt, dass sich ein Verstellen des Interaktionsabschnitts 4 zum Eintauchen in die Vertiefung 5 oder zum Entfernen aus der Vertiefung 5 auch auf das Stellelement 6 überträgt. Somit ist das Stellelement 16 infolge des Entfernens des Interaktionsabschnitts 4 aus der Vertiefung 5 von der eingefahrenen Position PE in die ausgefahrene Position PA verstellbar. Das Stellelement 16 kann dabei quer zur Transportrichtung T, vorliegend vertikal entlang einer Schwerkraftrichtung, mittels eines elastischen Vorspannelements in seine ausgefahrene Position PA hin vorgespannt sein. Das Stellelement 16 kann im Bereich seiner Aufnahmeaussparung für den Interaktionsabschnitt 4 einen C-förmigen Querschnitt aufweisen. An einem von zwei einander entlang der Schwerkraftrichtung gegenüberliegenden Schenkeln des C-förmigen Abschnitts kann ein Führungsabschnitt des Stellelements 16 angeordnet sein, der einer Führung des Stellelements 16 entlang der Schwerkraftrichtung relativ zur Transportfläche 2 dient.

Bei den gezeigten Ausführungsformen ist der Interaktionsabschnitt 4 mittels der antreibbaren Stelleinrichtung 6 zwischen der ersten Endposition P1 und der zweiten Endposition P2 über eine Zwischenposition PZ verstellbar. Mit anderen Worten: Wird der Interaktionsabschnitt 6 von der ersten Endposition P1 in die zweite Endposition P2 verstellt oder umgekehrt, so durchläuft der Interaktionsabschnitt 4 die Zwischenposition PZ. Die Zwischenposition PZ ist also hinsichtlich eines Bewegungsablaufs beim Verstellen des Interaktionsabschnitts 4 zwischen seinen beiden Endpositionen P1, P2 zwischen diesen Endpositionen P1, P2 angeordnet. Beispielsweise ist der Interaktionsabschnitt 4 zwischen seinen beiden Endpositionen P1, P2 über die Zwischenposition PZ derart verstellbar, dass der Interaktionsabschnitt 4 die Transportfläche 2 entlang der Transportrichtung T überstreicht. Insbesondere überstreicht der Interaktionsabschnitt 4 die Transportfläche 2, wenn der Interaktionsabschnitt 4 zwischen seiner Zwischenposition PZ und der zweiten Endposition P2 verstellt wird. Infolge des Überstreichens der Transportfläche 2 mittels des Interaktionsabschnitts 4 können auf der Transportfläche 2 befindliche sterile Objekte 50 mittels des Interaktionsabschnitts 4 verschoben werden. In der Zwischenposition PZ ist eine Unterseite 4 des Interaktionsabschnitts 4 auf einem Niveau der Transportfläche 2 angeordnet. In der Zwischenposition PZ kann somit der Interaktionsabschnitt 4 derart an der Vertiefung 5 angeordnet sein, dass die Unterseite 8 die Vertiefung 5 bündig mit der Transportfläche 2 abschließend verschließt. Die Zwischenposition PZ ist dabei entlang der Transportrichtung T in einem zweiten Abstand zur zweiten Endposition P2 angeordnet. Zwischen der zweiten Endposition P2 und der Zwischenposition PZ ist der Interaktionsabschnitt 4 beispielsweise linear verstellbar.

Vorliegend weist das Transportsystem 1 eine Zuführeinrichtung 10 auf. Mittels der Zuführeinrichtung 10 ist die Anzahl N steriler Objekte 50 auf der Transportfläche 2 positionierbar, so dass die Anzahl N steriler Objekte 50 anschließend auf der Transportfläche 2 verschoben werden kann. Dabei ist die Zuführeinrichtung 10 dazu eingerichtet, bei in der ersten Endposition P1 befindlichem Interaktionsabschnitt 4 die Anzahl N steriler Objekte 50 von einem Vorladebereich 15 des Transportsystems 1 über den Interaktionsabschnitt 4 hinweg auf die Transportfläche 2 zu schieben. Der Vorladebereich 15 kann in einer gemeinsamen Transportebene mit der Transportfläche 2 angeordnet sein. Die Oberseite 7 oder das Stellelement 10 können in der zweiten Endposition P2 des Interaktionsabschnitts 4 bündig sowohl mit der Transportfläche 2 als auch mit dem Vorladebereich 15 abschließen, so dass sich eine durchgängige, beispielsweise stufenfreie und/oder gefällefreie, Transportebene ergibt, entlang welcher die Anzahl N steriler Objekte 50 verschiebbar ist. Mittels der Zuführeinrichtung 10 können also aus dem Vorladebereich 15 über die Vertiefung 5 hinweg sterile Objekte 50 der Transportfläche 2 zugeführt werden, um im Anschluss mittels des Interaktionsabschnitts 4 über die Transportfläche 2 verschoben zu werden. Die Zuführeinrichtung 10 weist vorliegend ein Stempelelement 11 auf, welches entlang der Transportrichtung T relativ zu der Transportfläche 2 zwischen einer ersten Stempelposition S1 und einer zweiten Stempelposition S2 verstellbar ist. Beispielsweise ist das Stempelelement 11 als Querschieber, Kolben oder Stößel ausgebildet. Dabei ist die Vertiefung 5 entlang der Transportrichtung T zwischen der ersten Stempelposition S1 und der zweiten Stempelposition P2 angeordnet. Durch Verstellen des Stempelelements 1 von seiner ersten Stempelposition S1 in seine zweite Stempelposition S2 kann die Anzahl N steriler Objekte 50 vom Vorladebereich 15 über die Vertiefung 5 und den darin in seiner zweiten Endposition P2 aufgenommenen Interaktionsabschnitt 4 hinweg verschoben werden, um die Anzahl N steriler Objekte 50 auf der Transportfläche anzuordnen.

Das Transportsystem 1 weist vorliegend eine gemeinsame Steuerungseinrichtung 20 auf. Mittels der Steuerungseinrichtung 20 sind die Zuführeinrichtung 10 und die Transporteinheit 3 aufeinander abgestimmt steuerbar. Beispielsweise ist die antreibbare Stelleinrichtung 6 der Transporteinheit 3 mittels der gemeinsamen Steuerungseinrichtung 20 auf die Zuführeinrichtung 10 abgestimmt steuerbar. Auf diese Weise kann die Verstellung der Zuführeinrichtung 10, beispielsweise des Stempelelements 11, und des Interaktionsabschnitts 4 koordiniert und kollisionsfrei erfolgen.

Die antreibbare Stelleinrichtung 6 weist vorliegend eine Basis 12 auf. Zudem weist die Stelleinrichtung 6 einen steuerbaren Gelenkarm 13 auf. Bei dem Gelenkarm 13 kann es sich um einen Roboterarm oder einen Manipulator handeln. Dabei ist die Basis 12 relativ zur Transportfläche 2 unbeweglich. Der Gelenkarm 13 ist einenends mit der Basis 12 gelenkig verbunden. Andernends ist der Gelenkarm 13 mit dem Interaktionsabschnitt 4 verbunden. Der Gelenkarm 13 kann dabei wenigstens zwei gelenkig miteinander verbundene Armglieder 14 aufweisen. Vorliegend weist der Gelenkarm 13 drei derartige gelenkig miteinander verbundene Armglieder 14 auf. Eine gelenkige Verbindung kann dabei mittels eines Scharniergelenks, eines Kugelgelenks oder eines sonstigen Gelenks realisiert sein. Vorliegend sind die Armglieder 14 paarweise mittels Scharniergelenken gelenkig miteinander verbunden. Jedes Gelenk kann wenigstens eine Gelenkachse festlegen, um welche die mittels dieses Gelenks miteinander verbundenen Armglieder 14 relativ zueinander verschwenkbar sind. Der Gelenkarm 13 kann entsprechend mehrgelenkig und/oder mehrachsig ausgebildet sein.

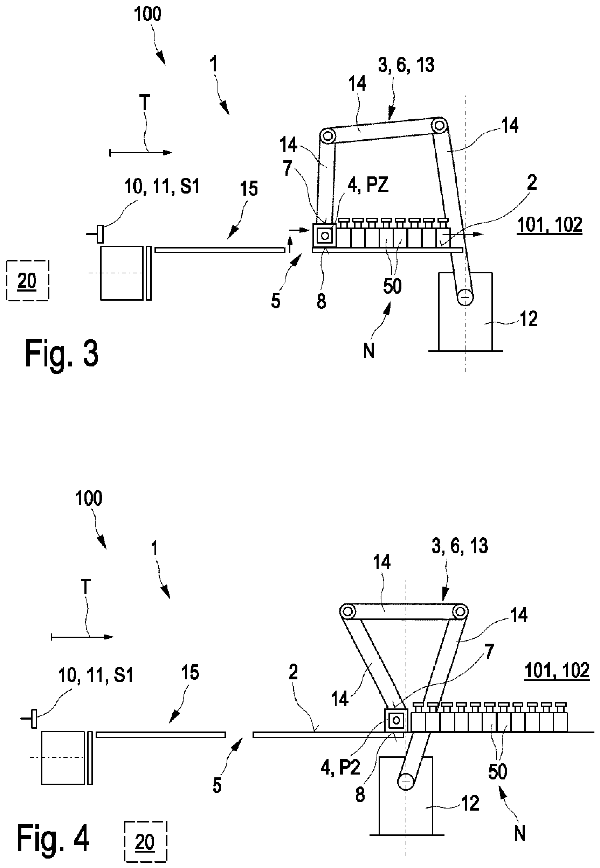

Mittels des Transportsystems 1 ist ein erfindungsgemäßes Verfahren ausführbar, welches einem paketweisen Transportieren steriler Objekte 50 mittels des Transportsystems 1 dient. Der Ablauf des Verfahrens ist anhand der Fig. 1 bis 4 sowie anhand der Fig. 5 bis 7 nachvollziehbar, die jeweils beispielhaft Momentaufnahmen der beschriebenen Ausführungsformen des Transportsystems 1 bei der Durchführung des Verfahrens zeigen. Beispielsweise können gemäß dem Verfahren mittels des Transportsystems 1 paketweise sterile Objekte 50 in dem System 100 transportiert werden. Das Verfahren weist einen Schritt a) auf. Gemäß dem Schritt a) wird der Interaktionsabschnitt 4 in seine erste Endposition P1 verstellt. Das Verfahren weist ferner einen Schritt b) auf. Wenn sich der Interaktionsabschnitt 4 in einer ersten Endposition P1 befindet, wird gemäß dem Schritt b) eine vorbestimmte Anzahl N steriler Objekte 50 auf der Transportfläche 2 mittels einer Zuführeinrichtung 10 positioniert. Vorliegend wird die vorbestimmte Anzahl N steriler Objekte 50 über den Interaktionsabschnitt 4 hinweg auf der Transportfläche 2 positioniert. Dies ist beispielsweise in den Fig. 1 und 2 sowie in Fig. 5 in der Art von Momentaufnahmen gezeigt. Das Verfahren weist zudem einen Schritt c) auf. Wenn sich die vorbestimmten Anzahl N steriler Objekte 50 auf der Transportfläche 2 befindet, wird die Zuführeinrichtung 10 von der Transportfläche 2 entfernt. Beispielsweise wird die Zuführeinrichtung 10 über den Interaktionsabschnitt 4 hinweg von der Transportfläche 2 entfernt. Das Verfahren weist außerdem einen Schritt d) auf. Wenn die Zuführeinrichtung 10 von der Transportfläche 2 und der Vertiefung 5 entfernt ist, wird gemäß dem Schritt d) der Interaktionsabschnitt 4 aus seiner ersten Endposition P1 in seine zweite Endposition P2 verstellt, um die vorbestimmte Anzahl N steriler Objekte 50 auf der Transportfläche 2 in Transportrichtung T zu verschieben. Dies ist exemplarisch in der Art von Momentaufnahmen in den Fig. 3 und 4 sowie in den Fig. 6 und 7 gezeigt. Das Verfahren kann zudem einen Schritt e) aufweisen, gemäß welchem ein erneutes Durchführen von Schritt a) erfolgt, um eine weitere vorbestimmte Anzahl N steriler Objekte 50 zu transportieren, wenn sich der Interaktionsabschnitt 4 in seiner zweiten Endposition P2 befindet. Somit können mehrere Pakete steriler Objekte 50 nacheinander diskontinuierlich transportiert werden.

## Patentansprüche

1. Transportsystem (1) zum paketweisen Transportieren steriler Objekte (50), insbesondere unverschlossener Behältnisse, wie Ampullen oder Vials (51), aufweisend eine Transportfläche (2), auf welcher eine Anzahl (N) zu transportierender steriler Objekte (50) verschiebbar ist,
eine Transporteinheit (3) mit einem Interaktionsabschnitt (4) zum Verschieben der auf der Transportfläche (2) verschiebbaren Anzahl (N) steriler Objekte (50) in einer Transportrichtung (T) des Transportsystems (1), und
eine von der Transportfläche (2) rückspringende Vertiefung (5) zum Aufnehmen des Interaktionsabschnitts (4),
wobei die Transporteinheit (3) eine antreibbare Stelleinrichtung (6) aufweist, mittels welcher der Interaktionsabschnitt (4) relativ zu der Transportfläche (2) zwischen einer ersten Endposition (P1) und einer zweiten Endposition (P2) verstellbar ist,
wobei in der ersten Endposition (P1) der Interaktionsabschnitt (4) in der Vertiefung (5) versenkt ist, um die Vertiefung (5) bündig mit der Transportfläche (2) abschließend zu verschließen, und
wobei in der zweiten Endposition (P2) der Interaktionsabschnitt (4) in Transportrichtung (T) in einem ersten Abstand zu der Vertiefung (5) auf der Transportfläche (2) angeordnet ist.

2. Transportsystem (1) nach Anspruch 1, **dadurch gekennzeichnet, dass**
der Interaktionsabschnitt (4) mittels der antreibbaren Stelleinrichtung (6) zwischen der ersten Endposition (P1) und der zweiten Endposition (P2) über eine Zwischenposition (PZ) verstellbar ist, insbesondere derart dass der Interaktionsabschnitt (4) die Transportfläche (2) entlang der Transportrichtung (T) überstreicht,
in der Zwischenposition (PZ) eine Unterseite (8) des Interaktionsabschnitt (4) auf einem Niveau der Transportfläche (2) oder oberhalb des Niveaus der Transportfläche (2) angeordnet ist, und
die Zwischenposition (PZ) entlang der Transportrichtung (T) in einem zweiten Abstand zur zweiten Endposition (P2) angeordnet ist.

3. Transportsystem (1) nach einem der vorhergehenden Ansprüche, **dadurch gekennzeichnet, dass**
das Transportsystem (1) eine Zuführeinrichtung (10) aufweist, mittels welcher die Anzahl (N) steriler Objekte (50) auf der Transportfläche (2) positionierbar ist, und dass
die Zuführeinrichtung (10) dazu eingerichtet ist, bei in der ersten Endposition (P1) befindlichem Interaktionsabschnitt (4) die Anzahl (N) steriler Objekte (50) von einem Vorladebereich (15) des Transportsystems (1) über den Interaktionsabschnitt (4) hinweg auf die Transportfläche (2) zu schieben.

4. Transportsystem (1) nach Anspruch 3, **dadurch gekennzeichnet, dass**
die Zuführeinrichtung (10) ein Stempelelement (11) aufweist, welches entlang der Transportrichtung (T) relativ zu der Transportfläche (2) zwischen einer ersten Stempelposition (S1) und einer zweiten Stempelposition (S2) verstellbar ist,
wobei die Vertiefung (5) entlang der Transportrichtung (T) zwischen der ersten Stempelposition (S1) und der zweiten Stempelposition (S2) angeordnet ist.

5. Transportsystem (1) nach Anspruch 3 oder 4, **dadurch gekennzeichnet, dass**
das Transportsystem (1) eine gemeinsame Steuerungseinrichtung (20) aufweist, mittels welcher die Zuführeinrichtung (10) und die Transporteinheit (3), insbesondere die antreibbare Stelleinrichtung (6), aufeinander abgestimmt steuerbar sind.

6. Transportsystem (1) nach einem der vorhergehenden Ansprüche, **dadurch gekennzeichnet, dass**
die antreibbare Stelleinrichtung (6) eine Basis (12) und einen steuerbaren Gelenkarm (13) aufweist,
wobei die Basis (12) relativ zur Transportfläche (2) unbeweglich ist,
wobei der Gelenkarm (13) einenends mit der Basis (12) gelenkig verbunden ist und anderenends mit dem Interaktionsabschnitt (4) verbunden ist,
wobei der Gelenkarm (13) insbesondere wenigstens zwei gelenkig miteinander verbundene Armglieder (14) aufweist.

7. Transportsystem (1) nach einem der vorhergehenden Ansprüche, **dadurch gekennzeichnet, dass**
in der ersten Endposition (P1) des Interaktionsabschnitts (4) eine Oberseite (7) des Interaktionsabschnitts (4) bündig mit der Transportfläche (2) abschließt.

8. Transportsystem (1) nach einem der Ansprüche 1 bis 6, **dadurch gekennzeichnet, dass** das Transportsystem (1) ein Stellelement (16) aufweist, welches in der Vertiefung (5) quer zur Transportfläche (2) zwischen einer ausgefahrenen Position (PA) und einer eingefahrenen Position (PE) beweglich geführt ist,
wobei in der eingefahrenen Position (PE) das Stellelement (16) bündig mit der Transportfläche (2) abschließt,
wobei in der ausgefahrenen Position (PA) das Stellelement (16) von der Transportfläche (2) vorspringt,
wobei das Stellelement (16) infolge des Versenkens des Interaktionsabschnitts (4) in der Vertiefung (5) von der ausgefahrenen Position (PA) in die eingefahrenen Position (PE) verstellbar ist, und
wobei das Stellelement (16) infolge eines Entfernens des Interaktionsabschnitts (4) aus der Vertiefung (5) von der eingefahrenen Position (PE) in die ausgefahrene Position (PA) verstellbar ist.

9. System (100) zum Gefriertrocknen steriler Objekte (50), insbesondere unverschlossener Ampullen oder Vials (51), aufweisend
einen Gefriertrockner (101) mit einer Trockenkammer (102),
ein Transportsystem (1) nach einem der vorhergehenden Ansprüche,
wobei die Transportfläche (2) in Transportrichtung (T) in der Trockenkammer (102) endet, so dass mittels des Transportsystems (1) paketweise sterile Objekte (50) der Trockenkammer (102) zuführbar sind.

10. Verfahren zum paketweisen Transportieren steriler Objekte (50), insbesondere unverschlossener Behältnisse, wie Ampullen oder Vials (51), mittels eines Transportsystems (1) nach einem der Ansprüche 1 bis 8, insbesondere in einem System (100) nach Anspruch 9, aufweisend nachfolgende Schritte:
a) Verstellen des Interaktionsabschnitts (4) in seine erste Endposition (P1);
b) wenn sich der Interaktionsabschnitt (4) in seiner ersten Endposition (P1) befindet: Positionieren einer vorbestimmten Anzahl (N) steriler Objekte (50) auf der Transportfläche (2) mittels einer Zuführeinrichtung (10), insbesondere über den Interaktionsabschnitts (4) hinweg;
c) wenn sich die vorbestimmte Anzahl (N) steriler Objekte (50) auf der Transportfläche (2) befindet: Entfernen der Zuführeinrichtung (10) von der Transportfläche (2), insbesondere über den Interaktionsabschnitts (4) hinweg;
d) wenn die Zuführeinrichtung (10) von der Transportfläche (2) und der Vertiefung (5) entfernt ist: Verstellen des Interaktionsabschnitts (4) aus seiner ersten Endposition (P1) in seine zweite Endposition (P2), um die vorbestimmte Anzahl (N) steriler Objekte (50) auf der Transportfläche (2) in Transportrichtung (T) zu verschieben;
e) insbesondere wenn sich der Interaktionsabschnitt (4) in seiner zweiten Endposition (P2) befindet: erneutes Durchführen von Schritt a), um eine weitere vorbestimmte Anzahl (N) steriler Objekte (50) zu Transportieren.

## Claims

1. Transport system (1) by which sterile objects (50), in particular unsealed containers, such as ampoules or vials (51), are transported in packs, comprising a transport surface (2) on which a number (N) of sterile objects (50) to be transported can be moved,
a transport unit (3) having an interaction section (4) by means of which the number (N) of sterile objects (50) movable on the transport surface (2) is moved in a transport direction (T) of the transport system (1), and a recess (5), set back from the transport surface (2), for receiving the interaction section (4),
wherein the transport unit (3) has a driveable adjustment device (6), by means of which the interaction section (4) is adjustable relative to the transport surface (2) between a first end position (P1) and a second end position (P2),
wherein, in the first end position (P1), the interaction section (4) is set down in the recess (5) in order to close the recess (5) flush with the transport surface (2), and
wherein, in the second end position (P2), the interaction section (4) is arranged on the transport surface (2) at a first distance from the recess (5) in the transport direction (T).

2. Transport system (1) according to Claim 1, **characterized in that**
the interaction section (4) is adjustable by means of the driveable adjustment device (6) between the first end position (P1) and the second end position (P2) via an intermediate position (PZ), in particular in such a way that the interaction section (4) sweeps over the transport surface (2) along the transport direction (T), in the intermediate position (PZ), an underside (8) of the interaction section (4) is arranged on a level of the transport surface (2) or above the level of the transport surface (2), and
the intermediate position (P2) is arranged along the transport direction (T) at a second distance from the second end position (P2).

3. Transport system (1) according to either of the preceding claims, **characterized in that**
the transport system (1) has a feed device (10), by means of which the number (N) of sterile objects (50) can be positioned on the transport surface (2), and **in that**,
when the interaction section (4) is located in the first end position (P1), the feed device (10) is configured to push the number (N) of sterile objects (50) from a preloading region (15) of the transport system (1) over the interaction section (4) onto the transport surface (2).

4. Transport system (1) according to Claim 3, **characterized in that**
the feed device (10) has a ram element (11) which, along the transport direction (T), is adjustable relative to the transport surface (2) between a first ram position (S1) and a second ram position (S2),
wherein the recess (5) is arranged along the transport direction (T) between the first ram position (S1) and the second ram position (S2).

5. Transport system (1) according to Claim 3 or 4, **characterized in that**
the transport system (1) has a common control device (20), by means of which the feed device (10) and the transport unit (3), in particular the driveable adjustment device (6), can be controlled in a coordinated manner.

6. Transport system (1) according to any one of the preceding claims, **characterized in that**
the driveable adjustment device (6) has a base (12) and a controllable articulated arm (13),
wherein the base (12) is immovable relative to the transport surface (2),
wherein the articulated arm (13) is at one end connected to the base (12) in an articulated manner and at the other end is connected to the interaction section (4),
wherein the articulated arm (13) in particular has at least two arm members (14) connected to each other in an articulated manner.

7. Transport system (1) according to any one of the preceding claims, **characterized in that**
in the first end position (P1) of the interaction section (4), a top (7) of the interaction section (4) lies flush with the transport surface (2).

8. Transport system (1) according to any one of Claims 1 to 6, **characterized in that**
the transport system (1) has an adjustment element (16) which is guided movably in the recess (5) transversely with respect to the transport surface (2) between an extended position (PA) and a retracted position (PE),
wherein, in the retracted position (PE), the adjustment element (16) lies flush with the transport surface (2),
wherein, in the extended position (PA), the adjustment element (16) protrudes from the transport surface (2),
wherein the adjustment element (16) is adjustable from the extended position (PA) to the retracted position (PE) as a result of the setting down of the interaction section (4) in the recess (5), and
wherein the adjustment element (16) is adjustable from the retracted position (PE) to the extended position (PA) as a result of withdrawal of the interaction section (4) from the recess (5).

9. System (100) for freeze-drying of sterile objects (50), in particular unsealed ampoules or vials (51), comprising
a freeze dryer (101) with a drying chamber (102),
a transport system (1) according to any one of the preceding claims,
wherein the transport surface (2) ends in the transport direction (T) in the drying chamber (102), so that sterile objects (50) can be fed in packs to the drying chamber (102) by means of the transport system (1).

10. Method by which sterile objects (50), in particular unsealed containers, such as ampoules or vials (51), are transported in packs by means of a transport system (1) according to any one of Claims 1 to 8, in particular in a system (100) according to Claim 9, comprising the following steps:
a) moving the interaction section (4) to its first end position (P1);
b) when the interaction section (4) is located in its first end position (P1): positioning a predetermined number (N) of sterile objects (50) on the transport surface (2) by means of a feed device (10), in particular across the interaction section (4);
c) when the predetermined number (N) of sterile objects (50) are located on the transport surface (2): removing the feed device (10) from the transport surface (2), in particular across the interaction section (4);
d) when the feed device (10) is removed from the transport surface (2) and the recess (5): moving the interaction section (4) from its first end position (P1) to its second end position (P2) in order to move the predetermined number (N) of sterile objects (50) on the transport surface (2) in the transport direction (T);
e) in particular when the interaction section (4) is located in its second end position (P2): performing step a) again, in order to transport a further predetermined number (N) of sterile objects (50).

## Revendications

1. Système de transport (1) pour transporter par paquets des objets stériles (50), notamment des récipients non fermés, tels que des ampoules ou des flacons (51), présentant une surface de transport (2) sur laquelle un nombre (N) d'objets stériles (50) à transporter peut être déplacé,
une unité de transport (3) avec une section d'interaction (4) pour déplacer le nombre (N) d'objets stériles (50) pouvant être déplacés sur la surface de transport (2) dans une direction de transport (T) du système de transport (1), et
un renfoncement (5) en retrait par rapport à la surface de transport (2) pour recevoir la section d'interaction (4),
l'unité de transport (3) présentant un appareil de réglage entraînable (6) au moyen duquel la section d'interaction (4) peut être réglée par rapport à la surface de transport (2) entre une première position d'extrémité (P1) et une deuxième position d'extrémité (P2),
la section d'interaction (4) étant enfoncée dans le renfoncement (5) dans la première position d'extrémité (P1) afin de fermer le renfoncement (5) à fleur de la surface de transport (2), et
dans la deuxième position d'extrémité (P2), la section d'interaction (4) étant agencée dans la direction de transport (T) à une première distance du renfoncement (5) sur la surface de transport (2).

2. Système de transport (1) selon la revendication 1, **caractérisé en ce que**
la section d'interaction (4) peut être réglée au moyen de l'appareil de réglage entraînable (6) entre la première position d'extrémité (P1) et la deuxième position d'extrémité (P2) en passant par une position intermédiaire (PZ), notamment de telle sorte que la section d'interaction (4) balaye la surface de transport (2) le long de la direction de transport (T),
dans la position intermédiaire (PZ), un côté inférieur (8) de la section d'interaction (4) est agencé à un niveau de la surface de transport (2) ou au-dessus du niveau de la surface de transport (2), et
la position intermédiaire (PZ) est agencée le long de la direction de transport (T) à une deuxième distance par rapport à la deuxième position d'extrémité (P2).

3. Système de transport (1) selon l'une quelconque des revendications précédentes, **caractérisé en ce que**
le système de transport (1) présente un appareil d'acheminement (10) au moyen duquel le nombre (N) d'objets stériles (50) peut être positionné sur la surface de transport (2), et **en ce que**
l'appareil d'acheminement (10) est adapté pour pousser, lorsque la section d'interaction (4) se trouve dans la première position d'extrémité (P1), le nombre (N) d'objets stériles (50) depuis une zone de préchargement (15) du système de transport (1) vers la surface de transport (2) en passant par la section d'interaction (4).

4. Système de transport (1) selon la revendication 3, **caractérisé en ce que**
l'appareil d'acheminement (10) présente un élément de poinçon (11) qui est réglable le long de la direction de transport (T) par rapport à la surface de transport (2) entre une première position de poinçon (S1) et une deuxième position de poinçon (S2),
le renfoncement (5) étant agencé dans la direction de transport (T) entre la première position de poinçon (S1) et la deuxième position de poinçon (S2).

5. Système de transport (1) selon la revendication 3 ou 4, **caractérisé en ce que**
le système de transport (1) présente un appareil de commande commun (20) au moyen duquel l'appareil d'acheminement (10) et l'unité de transport (3), notamment l'appareil de commande entraînable (6), peuvent être commandés de manière coordonnée.

6. Système de transport (1) selon l'une quelconque des revendications précédentes, **caractérisé en ce que**
l'appareil de commande entraînable (6) présente une base (12) et un bras articulé commandable (13),
la base (12) étant immobile par rapport à la surface de transport (2),
le bras articulé (13) étant relié à une extrémité à la base (12) de manière articulée et étant relié à l'autre extrémité à la section d'interaction (4),
le bras articulé (13) présentant notamment au moins deux maillons de bras (14) reliés entre eux de manière articulée.

7. Système de transport (1) selon l'une quelconque des revendications précédentes, **caractérisé en ce que**
dans la première position d'extrémité (P1) de la section d'interaction (4), un côté supérieur (7) de la section d'interaction (4) finit à fleur avec la surface de transport (2).

8. Système de transport (1) selon l'une quelconque des revendications 1 à 6, **caractérisé en ce que**
le système de transport (1) présente un élément de réglage (16) qui est guidé de manière mobile dans le renfoncement (5) transversalement à la surface de transport (2) entre une position sortie (PA) et une position rentrée (PE),
dans la position rentrée (PE), l'élément de réglage (16) finissant à fleur avec la surface de transport (2),
l'élément de réglage (16) dépassant de la surface de transport (2) dans la position sortie (PA),
l'élément de réglage (16) pouvant être réglé de la position sortie (PA) à la position rentrée (PE) à la suite de l'enfoncement de la section d'interaction (4) dans le renfoncement (5), et
l'élément de réglage (16) pouvant être déplacé de la position rentrée (PE) à la position sortie (PA) à la suite du retrait de la section d'interaction (4) du renfoncement (5).

9. Système (100) pour la lyophilisation d'objets stériles (50), notamment d'ampoules ou de flacons non fermés (51), présentant
un lyophilisateur (101) avec une chambre de séchage (102),
un système de transport (1) selon l'une quelconque des revendications précédentes,
la surface de transport (2) se terminant dans la chambre de séchage (102) dans la direction de transport (T), de telle sorte que des objets stériles (50) peuvent être acheminés par paquets vers la chambre de séchage (102) au moyen du système de transport (1).

10. Procédé pour transporter par paquets des objets stériles (50), notamment des récipients non fermés, tels que des ampoules ou des flacons (51), au moyen d'un système de transport (1) selon l'une quelconque des revendications 1 à 8, notamment dans un système (100) selon la revendication 9, présentant les étapes suivantes :
a) le réglage de la section d'interaction (4) vers sa première position d'extrémité (P1) ;
b) lorsque la section d'interaction (4) se trouve dans sa première position d'extrémité (P1) : le positionnement d'un nombre prédéfini (N) d'objets stériles (50) sur la surface de transport (2) au moyen d'un appareil d'acheminement (10), notamment au-delà de la section d'interaction (4) ;
c) lorsque le nombre prédéfini (N) d'objets stériles (50) se trouve sur la surface de transport (2) : le retrait de l'appareil d'acheminement (10) de la surface de transport (2), notamment au-delà de la section d'interaction (4) ;
d) lorsque l'appareil d'acheminement (10) est retiré de la surface de transport (2) et du renfoncement (5) : le réglage de la section d'interaction (4) de sa première position d'extrémité (P1) à sa deuxième position d'extrémité (P2) afin de déplacer le nombre prédéfini (N) d'objets stériles (50) sur la surface de transport (2) dans la direction de transport (T) ;
e) notamment lorsque la section d'interaction (4) se trouve dans sa deuxième position d'extrémité (P2) : la nouvelle réalisation de l'étape a) afin de transporter un autre nombre prédéfini (N) d'objets stériles (50).
